# EUROPEAN PATENT APPLICATION

(11) **EP 4 553 977 A1**
(43) Date of publication of application: **14.05.2025**
(21) Application number: 22950066.5
(22) Date of filing: 22.11.2022
(51) Int. Cl.: H01M 50/244, B60K 1/04, H01M 50/249, B60L 53/80

(54) **BATTERY PACK FOR CONTAINER TRUCK BATTERY SWAPPING AND BATTERY SWAPPING METHOD THEREFOR**

(30) Priority: 06.07.2022 CN 202210789245
(71) Applicant: Shanghai Westwell Technology Co., Ltd., Shanghai 200050 (CN); SHANGHAI KEWE TECHNOLOGY CO., LTD., Shanghai 201306 (CN)
(72) Inventor: TAN, Limin, Shanghai 200050 (CN); JIANG, Hua, Shanghai 200050 (CN); HAN, Yanwei, Shanghai 200050 (CN); XU, Zhangcheng, Shanghai 200050 (CN)
(74) Representative: De Vries & Metman
(86) International application number: PCT/CN2022/133467
(87) International publication number: WO 2024/007508

(57) **Abstract**

Provided are a battery pack for container truck battery swapping and a battery swapping method therefor. The battery pack for container truck battery swapping comprises: a battery pack framework (13), wherein an internal space defined by the battery pack framework (13) is divided into an upper layer and a lower layer; a first space area (15) for accommodating a high-voltage junction box (24), a second space area (16) for accommodating a high-voltage control box (26) and a third space area (17) for accommodating an air conditioner compressor (21), wherein three space areas are arranged in the lower layer; a battery group arranged in a matrix on the upper layer of the battery pack framework (13), wherein a water-cooling pipeline of the air conditioner compressor (21) is communicated with the battery group, and a refrigerant flows out of the air conditioner compressor (21) and then travels in an anti-gravity direction to reach battery packs in the battery group; and a water-cooling water supply tank (22) arranged on one side of the highest battery pack in the battery group, wherein the water-cooling water supply tank (22) is communicated with the battery packs and the air conditioner compressor (21). The height and overall volume of the battery pack can be greatly reduced, so that the collision between the battery pack and a battery compartment is reduced during side-mounted battery swapping of an electric vehicle, and the safety and efficiency of battery swapping are improved.

## Description

### TECHNICAL FIELD

The present disclosure relates to the field of vehicle battery swapping, and in particular to a battery pack for container truck battery swapping and a battery swapping method therefor.

### BACKGROUND

Nowadays, new energy vehicle technology has entered a relatively mature development stage. However, compared with traditional fuel-powered vehicles, as electric vehicles have a short start-up time, consumers pay more attention to stability of three-electric systems of pure electric vehicles during use. In particular, the power battery is the core lifeblood of new energy vehicles.

In a new energy battery swapping station system of heavy-duty container trucks, the battery pack serves as an energy transfer unit, and structural layout design thereof is essential. Most existing battery packs are arranged on top of the air conditioner of the water-cooling system, causing the water supply tank of the water-cooling system to be higher (a certain height difference exists between the water supply tank and the air conditioner). The layout of the water supply tank and the air conditioner increases an overall height of the battery pack, resulting in a relatively high height of the entire battery pack. In addition, the guide mechanism is complex when the battery pack interacting with the vehicle-mounted base. Thirdly, as most battery packs are top-mounted, the height of the battery pack doesn't have a significant impact on the installation accuracy. These existing structures are difficult to reduce the height of the battery pack.

Therefore, when the method of using the battery pack needs to be improved, for example, when the battery pack needs to be installed sideways, the height of the battery pack is too high, which will obviously affect the installation accuracy of the battery pack, causing the battery pack to collide with the battery compartment, etc., creating a safety hazard.

It should be noted that the information disclosed in the background is only used to facilitate the understanding of the background of the present disclosure, and therefore may include information that does not constitute the prior art known to those skilled in the field.

### SUMMARY

To solve the problems in the prior art, the present disclosure aims to provide a battery pack for container truck battery swapping and a battery swapping method therefor, which overcome the difficulties of the prior art and can greatly reduce the overall volume of the battery pack, especially the height, through an innovative internal layout, thereby reducing the collision between the battery pack and the battery compartment when swapping the battery in a side-mounted electric vehicle, thereby improving the safety and efficiency of battery swapping.

An embodiment of the present disclosure provides a battery pack for container truck battery swapping, wherein a battery pack body of the battery pack includes:
a battery pack frame, wherein an internal space defined by the battery pack frame is divided into an upper layer and a lower layer;
a first space area for accommodating a high-voltage junction box, a second space area for accommodating a high-voltage control box, and a third space area for accommodating an air-conditioner compressor, wherein three space areas are arranged in the lower layer;
a battery group arranged in a matrix on the upper layer of the battery pack frame, wherein water-cooling pipelines of the air-conditioner compressor are communicated with the battery group, refrigerant flows out of the air-conditioner compressor and then travels in an anti-gravity direction to reach battery units in the battery group; and
a water-cooling water supply tank arranged on one side of a highest battery unit in the battery group, wherein the water-cooling water supply tank is communicated with the battery pack and the air-conditioner compressor.

In some embodiments, the battery pack further includes:
at least one first battery-swapping connector arranged at a bottom of the second space area and electrically connected to the high-voltage control box.

In some embodiments, the high-voltage control box is electrically connected to the high-voltage junction box, and the high-voltage junction box is electrically connected to the battery group.

In some embodiments, the air-conditioner compressor is a horizontal compressor, and a rotating axis of a motor in the horizontal compressor is parallel to a length direction of the container truck.

In some embodiments, the high-voltage junction box, the high-voltage control box and the air-conditioner compressor are arranged in the lower layer and in sequence in a width direction of the container truck, and projection patterns of the high-voltage junction box, the high-voltage control box and the air-conditioner compressor based on a vertical plane perpendicular to the width direction of the container truck at least partially overlap with each other.

In some embodiments, water-cooling pipelines of the battery units in a same row in the battery group form a series pipeline, the water-cooling pipelines of the battery units in different rows in the battery pack form parallel pipelines, and heights of the high-voltage junction box, the high-voltage control box and the air-conditioner compressor are the same with each other.

In some embodiments, transverse or longitudinal main beams intersected with each other are provided within the battery pack frame;
on each of two sides of the battery pack frame, at least one battery ear plate extending in a direction away from the internal space is provided at an intersection position of the transverse main beam and the longitudinal main beam.

In some embodiments, a plurality of cross diagonal ribs are provided among the main beams.

An embodiment of the present disclosure further provides a battery swapping method for the above battery pack, wherein the method includes the following steps:
inserting the battery pack body into a battery compartment of a container truck in a width direction of the container truck;
when the battery pack body reaches above a battery docking position in the battery compartment, lowering the battery pack body, so that the battery pack body is mechanically aligned and electrically connected with the battery docking position.

In some embodiments, the battery docking position of the container truck is provided with at least two guide brackets and a second battery-swapping connector, and the guide brackets are vertically inserted into positioning holes of the battery pack frame of the battery pack body to guide the first battery-swapping connector and the second battery-swapping connector to dock vertically.

The battery pack for container truck battery swapping and the battery swapping method therefor of the present disclosure can greatly reduce the overall volume of the battery pack, especially the height, through an innovative internal layout, thereby reducing the collision between the battery pack and the battery compartment when swapping the battery in a side-mounted electric vehicle, thereby improving the safety and efficiency of battery swapping.

### BRIEF DESCRIPTION OF THE DRAWINGS

Other features, objectives and advantages of the present disclosure will become more apparent from reading the detailed description of non-limiting embodiments made with reference to the following accompanying drawings.
FIG. 1 is a three-dimensional view of a battery pack for container truck battery swapping according to the present disclosure.
FIG. 2 is a front view of the battery pack for container truck battery swapping of the present disclosure.
FIG. 3 is a side view of the battery pack for container truck battery swapping according to the present disclosure.
FIG. 4 is a three-dimensional view of connecting the battery pack for container truck battery swapping to the container truck of the present disclosure.
FIG. 5 is a front view of connecting the battery pack for container truck battery swapping to the container truck of the present disclosure.
FIG. 6 is a cross-sectional view taken along line A-A in FIG. 7.
FIG. 7 is a side view of connecting the battery pack for container truck battery swapping to the container truck of the present disclosure.
FIG. 8 is a flow chart of a battery swapping method for the battery pack according to the present disclosure.
FIGS. 9 to 10 are schematic views of the implementation process of the battery swapping method according to the present disclosure.

### DETAILED DESCRIPTION

The implementation methods of the present disclosure are described through specific examples. Those skilled in the art can easily understand other advantages and effects of the present disclosure from the contents disclosed in the present disclosure. The present disclosure may also be implemented or applied through other different specific implementation methods, and the details in the present disclosure may also be modified or changed in various ways according to different viewpoints and application systems without departing from the spirit of the present disclosure. It should be noted that, if there is no conflict, the embodiments and features in the embodiments of the present disclosure may be combined with each other.

The embodiments of the present disclosure are described in detail with reference to the accompanying drawings in the following, so that those skilled in the art can easily implement the embodiments. The present disclosure can be embodied in many different forms and is not limited to the embodiments described herein.

**In** the description of the present disclosure, terms such as "one embodiment", "some embodiments", "example", "specific example", or "some examples" means that the specific features, structures, materials or characteristics represented in combination with the embodiment or example are included in at least one embodiment or example of the present disclosure. Furthermore, the particular features, structures, materials, or characteristics shown may be combined in any suitable manner in any one or more embodiments or examples. Furthermore, those skilled in the art may combine and associate different embodiments or examples and features of different embodiments or examples presented in the present disclosure without mutual contradiction.

**In** addition, the terms "first" and "second" are used for descriptive purposes only and cannot be understood as indicating or implying relative importance or implicitly indicating the quantity of the indicated technical features. Therefore, features defined as "first" or "second" may explicitly or implicitly include at least one of these features. **In** the description of the present disclosure, "plurality" means two or more, unless otherwise clearly and specifically defined.

To clearly describe the present disclosure, components irrelevant to the description are omitted, and the same reference symbols are given to the same or similar components throughout the specification.

Throughout the specification, when a certain device is described as "connected" to another device, the two devices can be connected directly or indirectly with other components arranged therebetween. Furthermore, when a certain device is described as "including" a certain component, unless otherwise stated, the expression doesn't exclude other components but means that other components may also be included.

When a certain device is described as "on" another device, the certain device may be directly on the other device, or other devices can be arranged therebetween. Conversely, when a device is described as "directly on" another device, no intervening devices exists therebetween.

Although the terms first, second, etc. are used in the present disclosure to refer to various elements in some instances, these elements should not be limited by these terms. These terms are only used to distinguish one element from another. For example, a first interface and a second interface are indicated. Furthermore, as used herein, the singular forms "a", "an" and "the" are intended to include the plural forms as well, unless the context indicates otherwise. It should be further understood that the terms "comprising" and "including" indicate the existence of features, steps, operations, elements, components, items, types, and/or groups, but do not exclude the existence, occurrence, or addition of one or more other features, steps, operations, elements, components, items, types, and/or groups. The terms "or" and "and/or" used herein are interpreted as inclusive or meaning any one or any combination. Thus, "A, B or C" or "A, B and/or C" means any of the following: "A; B; C; A and B; A and C; B and C; A, B and C." Exceptions to this definition occur only when the combination of elements, functions, steps or operations are inherently mutually exclusive in some manner.

The technical terms used herein are only used to refer to specific embodiments and are not intended to limit the present disclosure. The singular forms used herein also include the plural form unless the context clearly indicates otherwise. The term "comprising" as used in the specification means specifying certain characteristics, regions, integers, steps, operations, elements and/or components, but does not exclude the existence or addition of other characteristics, regions, integers, steps, operations, elements and/or components.

Although not defined otherwise, all terms, including technical and scientific terms used herein, have the same meaning as generally understood by those skilled in the art of the present disclosure. Terms defined in commonly used dictionaries are additionally interpreted as having a meaning consistent with the content of the relevant technical literature and the current disclosure, and unless otherwise defined, shall not be overly interpreted as having an ideal or very formal meaning.

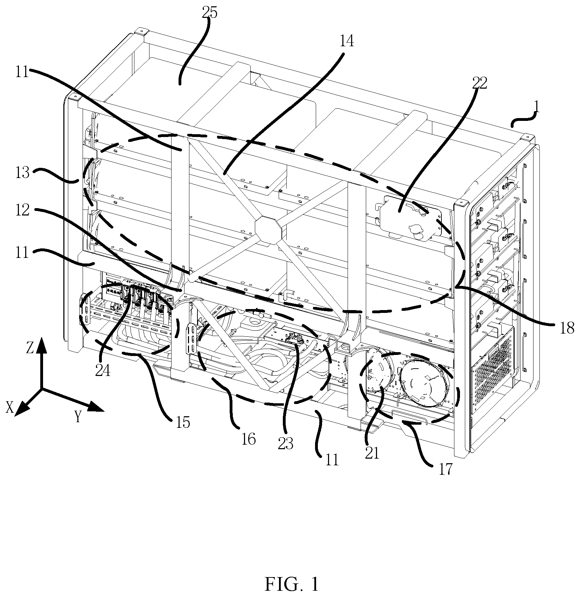

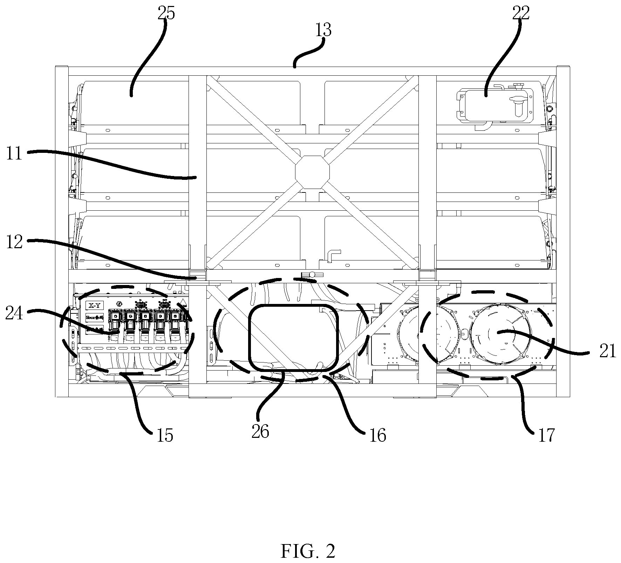

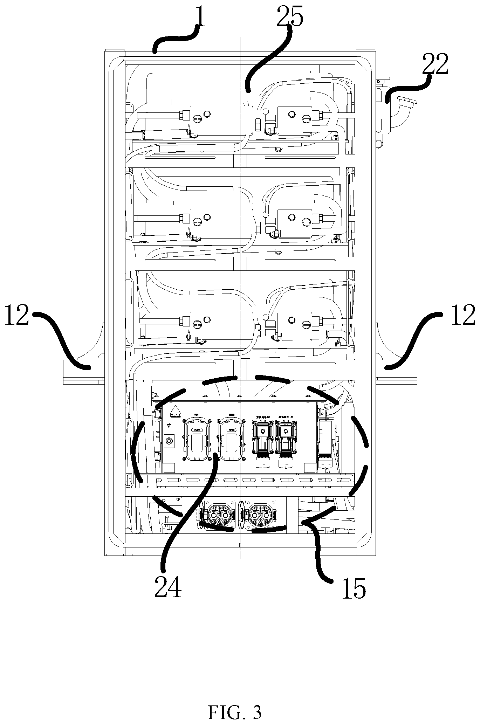

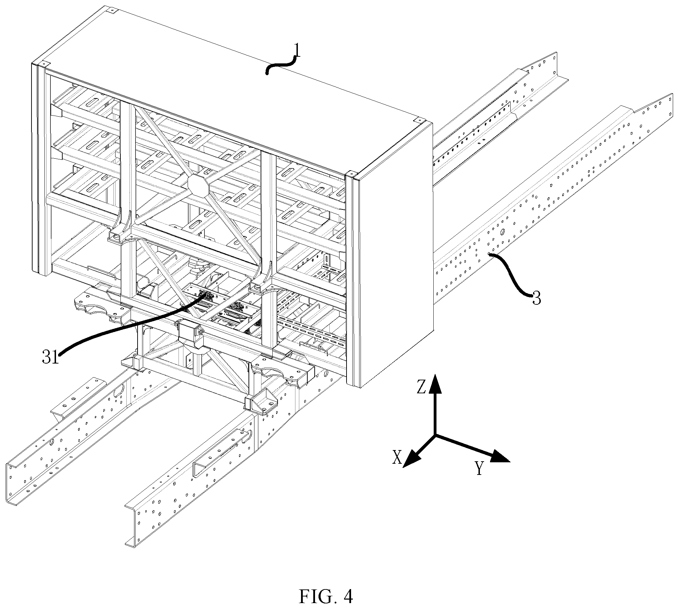

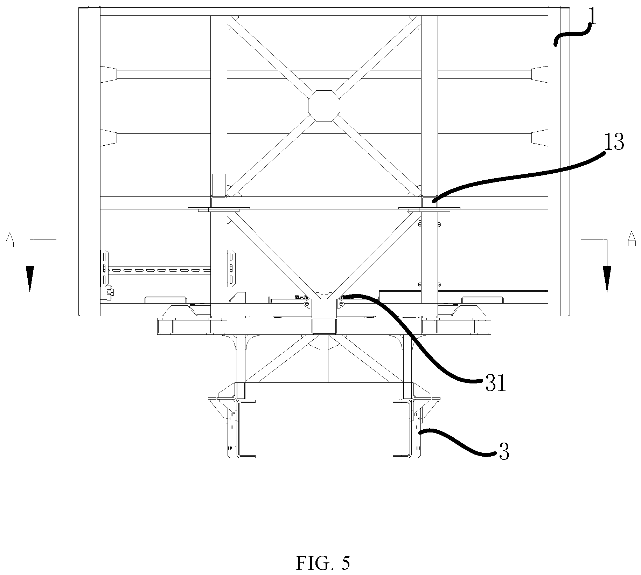

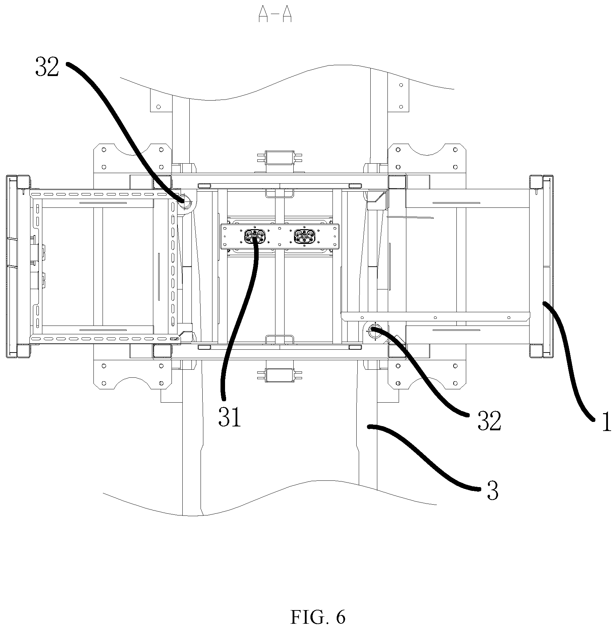

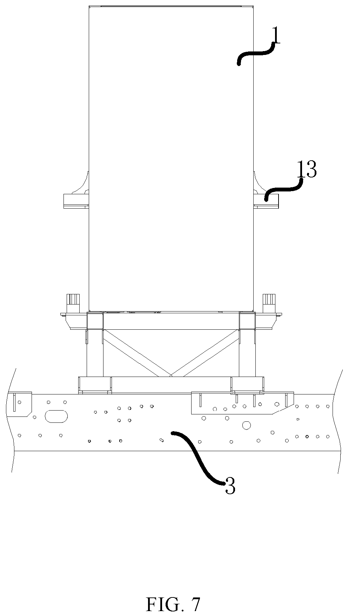

FIG. 1 is a three-dimensional view of a battery pack for container truck battery swapping according to the present disclosure. FIG. 2 is a front view of the battery pack for container truck battery swapping of the present disclosure. FIG. 3 is a side view of the battery pack for container truck battery swapping according to the present disclosure. FIG. 4 is a three-dimensional view of connecting the battery pack for container truck battery swapping to the container truck of the present disclosure. FIG. 5 is a front view of connecting the battery pack for container truck battery swapping to the container truck of the present disclosure. FIG. 6 is a cross-sectional view taken along line A-A in FIG. 7. FIG. 7 is a side view of connecting the battery pack for container truck battery swapping to the container truck of the present disclosure. As shown in FIGS. 1 to 7, the battery pack body 1 of the battery pack for container truck battery swapping of the present disclosure includes:
a battery pack frame 13, wherein an internal space defined by the battery pack frame 13 is divided into an upper layer and a lower layer;
a first space area 15 for accommodating a high-voltage junction box 24, a second space area 16 for accommodating a high-voltage control box 26, and a third space area 17 for accommodating an air-conditioner compressor 21, wherein three space areas 15, 16, 17 are arranged in the lower layer;
a battery group arranged in a matrix on the upper layer of the battery pack frame 13, wherein water-cooling pipelines of an air-conditioner compressor 21 are communicated with the battery group, refrigerant flows out of the air-conditioner compressor 21 and then travels in an anti-gravity direction to reach the battery units in the battery group;
a water-cooling water supply tank 22 arranged on one side of a highest battery unit in the battery group, wherein the water-cooling water supply tank 22 is communicated with the battery units and the air-conditioner compressor 21.

In a selective embodiment, the battery pack further includes at least one first battery-swapping connector 23 arranged at a bottom of the second space area 16, and the first battery-swapping connector 23 is electrically connected to the high-voltage control box 26. But the present disclosure is not limited to this.

In a selective embodiment, the high-voltage control box 26 is electrically connected to the high-voltage junction box 24, and the high-voltage junction box 24 is electrically connected to the battery group. But the present disclosure is not limited to this.

In a selective embodiment, the air-conditioner compressor 21 is a horizontal compressor, and a rotating shaft of a motor in the horizontal compressor is parallel to a length direction of the container truck. But the present disclosure is not limited to this.

In a selective embodiment, the high-voltage junction box 24, the high-voltage control box 26 and the air-conditioner compressor 21 are arranged in the lower layer and in sequence in a width direction of the container truck.

In a selective embodiment, projection patterns of the high-voltage junction box 24, the high-voltage control box 26 and the air-conditioner compressor 21 based on a vertical plane perpendicular to the width direction of the container truck at least partially overlap with each other. But the present disclosure is not limited to this.

In a selective embodiment, water-cooling pipelines of battery units in the same row in the battery group form a series pipeline, and water-cooling pipelines of battery units in different rows in the battery group form parallel pipelines, and heights of the high-voltage junction box 24, the high-voltage control box 26 and the air-conditioner compressor 21 are all the same. But the present disclosure is not limited to this.

In a selective embodiment, transverse or longitudinal main beams 11 are arranged within the battery pack frames 13, and the main beams 11 are intersected with each other.

On each of two sides of the battery pack frame 13, at least one battery ear plate 12 extending in a direction away from the internal space is provided at an intersection position of the transverse main beam 11 and the longitudinal main beam 11. But the present disclosure is not limited to this.

In a selective embodiment, a plurality of cross oblique ribs 14 are provided among the main beams 11. But the present disclosure is not limited to this.

The specific implementation of the present disclosure is described in the following.

As shown in FIGS. 1 to 7, the battery pack body 1 of the battery pack for container truck battery swapping of the present disclosure includes: a battery pack frame 13, a first battery-swapping connector 23, a high-voltage junction box 24, a high-voltage control box 26, an air-conditioner compressor 21, a battery group and a water-cooling water supply tank 22. The X direction is the length direction of the container truck, the Y direction is the width direction of the container truck, and the Z direction is the height direction of the container truck. Transverse or longitudinal main beams 11 intersected with each other are arranged within the battery pack frame 13 to further strengthen the load-bearing strength of the battery pack frame 13. On each of two sides of the battery pack frame 13, at least one battery ear plate 12 extending in a direction away from the internal space is provided at the intersection position of the transverse main beam 11 and the longitudinal main beam 11. Then a battery swapping robot is configured to carry the battery pack body 1 by supporting the battery ear plates 12. The inner side of the battery pack frame 13 is also provided with a plurality of through holes (positioning holes) for mechanically aligning with the guide brackets 32 of the battery compartment in the container truck. In addition, a plurality of cross oblique ribs 14 are provided within the main beams 11 to further strengthen the load-bearing strength of the battery pack frame 13. The inner space defined by the battery pack frame 13 is divided into an upper layer and a lower layer. The battery group is arranged in a matrix on the upper layer of the battery pack frame 13, and the water-cooling pipeline of the air-conditioner compressor 21 is communicated with the battery group. The refrigerant flows out of the air-conditioner compressor 21, then travels in the anti-gravity direction to reach the battery units in the battery group. The air-conditioner compressor 21 is a horizontal compressor, and a rotating shaft of a motor in the horizontal compressor is parallel to the length direction of the container truck. The water-cooling pipelines of the battery units in the same row in the battery group form a series pipeline, and the water-cooling pipelines of the battery units in different rows in the battery group form parallel pipelines. The heights of the high-voltage junction box 24, the high-voltage control box 26 and the air-conditioner compressor 21 are all the same. The first space area 15 accommodating the high-voltage junction box 24, the second space area 16 accommodating the high-voltage control box 26 and the third space area 17 accommodating the air-conditioner compressor 21 are arranged in the lower layer and in sequence along the width direction (Y direction) of the container truck. The water-cooling water supply tank 22 is arranged on one side of the highest battery unit in the battery group, and the water-cooling water supply tank 22 is connected with the battery group and the air-conditioner compressor 21. The first battery-swapping connector 23 is arranged at a bottom of the second space area 16, and the first battery-swapping connector 23 is electrically connected to the high-voltage control box 26. The battery pack is configured to be mounted on the vehicle-mounted base 3 of the container truck. The battery group in the battery pack body 1 supplies power to the container truck through the first battery-swapping connector 23. The high-voltage control box 26 is electrically connected to the high-voltage junction box 24, and the high-voltage junction box 24 is electrically connected to the battery group.

The present disclosure is equivalent to dividing the internal space of the battery pack frame 13 into an upper layer for accommodating the battery group and a lower layer for providing different functions. In the lower layer, the high-voltage junction box 24, the high-voltage control box 26 and the air-conditioner compressor 21 are arranged along the width direction (Y direction) of the container truck, so that the high-voltage junction box 24, the high-voltage control box 26 and the air-conditioner compressor 21 overlap as much as possible in the width direction (Y direction) of the container truck, thereby reducing the lateral height and width of the battery pack and reducing a lateral projection area of the battery pack as a whole. As a result, the container truck can use a smaller space to accommodate and swap the battery pack, breaking through the inherent structure of existing battery pack forms. In particular, the collision between the battery pack and the battery compartment when swapping the battery pack in side-mounted electric vehicles is reduced, thereby improving the safety and efficiency of battery swapping.

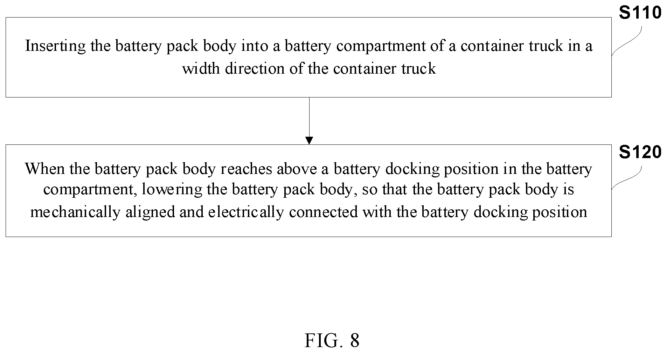

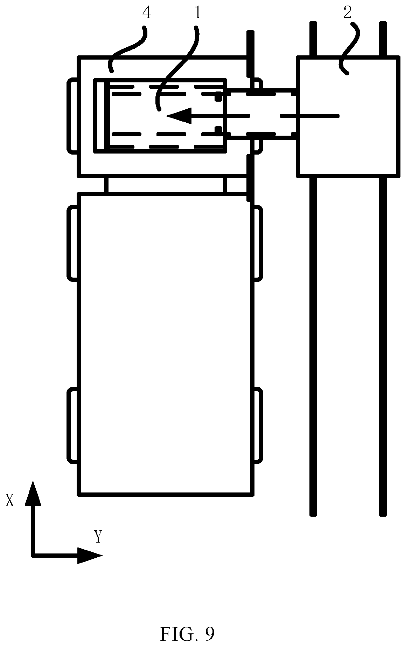

FIG. 8 is a flow chart of a battery swapping method for the battery pack according to the present disclosure. FIGS. 9 to 10 are schematic views of the implementation process of the battery swapping method for the battery pack according to the present disclosure. As shown in FIG. 8, a battery swapping method for the above battery pack of the present disclosure includes the following steps:
S110. the battery-swapping robot 2 supporting the battery ear plates 12 on both sides of the battery pack body 1 and moves the battery pack body 1 into a battery compartment of the container truck 4 along the width direction (Y direction) of the container truck 4 (shown in FIG. 9).

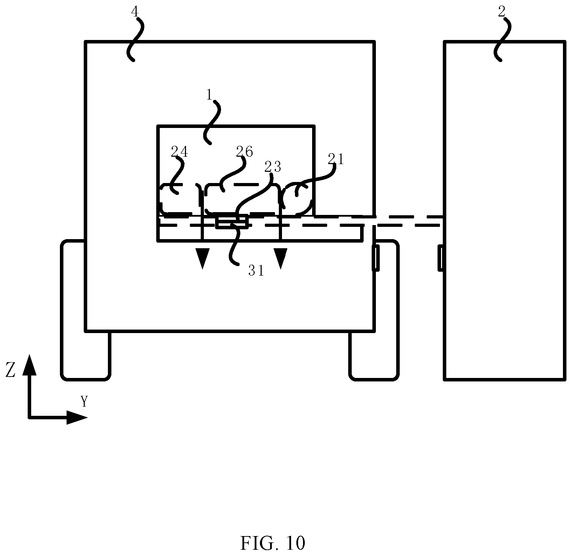

S120, when the battery pack body 1 reaches above a battery docking position in the battery compartment, lowering the battery pack body 1, so that the battery pack body 1 is mechanically aligned and electrically connected with the battery docking position. (shown in FIG. 10). Wherein, the battery docking position of the container truck 4 is provided with at least two guide brackets 32 and a second battery-swapping connector 31. The guide brackets 32 are inserted vertically into positioning holes of the battery pack frame 13 to guide the first battery-swapping connector 23 and the second battery-swapping connector 31 to dock vertically with each other.

In summary, the battery pack for container truck battery swapping and the battery swapping method therefor of the present disclosure can greatly reduce the overall volume of the battery pack, especially the height, through an innovative internal layout, thereby reducing the collision between the battery pack and the battery compartment when swapping the battery in a side-mounted electric vehicle, thereby improving the safety and efficiency of battery swapping.

The above contents are detailed descriptions of the present disclosure in combination with specific selective embodiments. However, the specific implementation methods of the present disclosure are not limited to these descriptions. For those skilled in the field of the present disclosure, several simple deductions or substitutions without departing from the concept of the present disclosure can be made and should all be regarded as falling into the protection scope of the present disclosure.

## Claims

1. A battery pack for container truck battery swapping, wherein a battery pack body of the battery pack comprises:
a battery pack frame, wherein an internal space defined by the battery pack frame is divided into an upper layer and a lower layer;
a first space area for accommodating a high-voltage junction box, a second space area for accommodating a high-voltage control box, and a third space area for accommodating an air-conditioner compressor, wherein three space areas are arranged in the lower layer;
a battery group arranged in a matrix on the upper layer of the battery pack frame, wherein water-cooling pipelines of the air-conditioner compressor are communicated with the battery group, refrigerant flows out of the air-conditioner compressor and then travels in an anti-gravity direction to reach battery units in the battery group; and
a water-cooling water supply tank arranged on one side of a highest battery unit in the battery group, wherein the water-cooling water supply tank is communicated with the battery pack and the air-conditioner compressor.

2. The battery pack for container truck battery swapping of claim 1 further comprising:
at least one first battery-swapping connector arranged at a bottom of the second space area and electrically connected to the high-voltage control box.

3. The battery pack for container truck battery swapping of claim 2, wherein the high-voltage control box is electrically connected to the high-voltage junction box, and the high-voltage junction box is electrically connected to the battery group.

4. The battery pack for container truck battery swapping of claim 2, wherein the air-conditioner compressor is a horizontal compressor, and a rotating axis of a motor in the horizontal compressor is parallel to a length direction of the container truck.

5. The battery pack for container truck battery swapping of claim 2, wherein the high-voltage junction box, the high-voltage control box and the air-conditioner compressor are arranged in the lower layer and in sequence in a width direction of the container truck, and projection patterns of the high-voltage junction box, the high-voltage control box and the air-conditioner compressor based on a vertical plane perpendicular to the width direction of the container truck at least partially overlap with each other.

6. The battery pack for container truck battery swapping of claim 2, wherein water-cooling pipelines of the battery units in a same row in the battery group form a series pipeline, the water-cooling pipelines of the battery units in different rows in the battery pack form parallel pipelines, and heights of the high-voltage junction box, the high-voltage control box and the air-conditioner compressor are the same with each other.

7. The battery pack for container truck battery swapping of claim 2, wherein transverse or longitudinal main beams intersected with each other are provided within the battery pack frame;
on each of two sides of the battery pack frame, at least one battery ear plate extending in a direction away from the internal space is provided at an intersection position of the transverse main beam and the longitudinal main beam.

8. The battery pack for container truck battery swapping of claim 7, wherein a plurality of cross diagonal ribs are provided among the main beams.

9. A battery swapping method for the battery pack according to any one of claims 2 to 8, wherein the method comprises the following steps:
inserting the battery pack body into a battery compartment of a container truck in a width direction of the container truck;
when the battery pack body reaches above a battery docking position in the battery compartment, lowering the battery pack body, so that the battery pack body is mechanically aligned and electrically connected with the battery docking position.

10. The battery swapping method of claim 9, wherein the battery docking position of the container truck is provided with at least two guide brackets and a second battery-swapping connector, and the guide brackets are vertically inserted into positioning holes of the battery pack frame of the battery pack body to guide the first battery-swapping connector and the second battery-swapping connector to dock vertically.
